(19) Europäisches Patentamt
European Patent Office
Office européen des brevets

(11) **EP 2 488 732 B1**

(12) **EUROPÄISCHE PATENTSCHRIFT**

(45) Veröffentlichungstag und Bekanntmachung des Hinweises auf die Patenterteilung:
**07.12.2016 Patentblatt 2016/49**

(21) Anmeldenummer: **10773605.0**

(22) Anmeldetag: **14.10.2010**

(51) Int Cl.:
*F01N 3/02* (2006.01)   *F01N 3/04* (2006.01)
*F02B 37/18* (2006.01)   *F02B 39/00* (2006.01)
*F02D 9/02* (2006.01)   *F02D 19/02* (2006.01)
*F02M 21/04* (2006.01)   *F02M 21/02* (2006.01)
*F02D 41/00* (2006.01)

(86) Internationale Anmeldenummer:
**PCT/EP2010/065480**

(87) Internationale Veröffentlichungsnummer:
**WO 2011/045400 (21.04.2011 Gazette 2011/16)**

(54) **LASTREGELUNGSVORRICHTUNG UND VERFAHREN ZUR LASTREGELUNG FÜR EINEN MOTOR**

LOAD CONTROL APPARATUS AND METHOD FOR CONTROLLING THE LOAD OF AN INTERNAL COMBUSTION ENGINE

DISPOSITIF DE RÉGULATION DE CHARGE ET PROCÉDÉ DE RÉGULATION DE LA CHARGE D'UN MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.10.2009 DE 102009049394**

(43) Veröffentlichungstag der Anmeldung:
**22.08.2012 Patentblatt 2012/34**

(73) Patentinhaber: **2G Energietechnik GmbH**
**48619 Heek (DE)**

(72) Erfinder: **HERDIN, Rüdiger**
**A-1060 Wien (AT)**

(74) Vertreter: **Liedtke, Markus**
**Liedtke & Partner**
**Patentanwälte**
**Gerhart-Hauptmann-Strasse 10-11**
**99096 Erfurt (DE)**

(56) Entgegenhaltungen:
**EP-A2- 0 434 419    DE-A1- 10 025 500**
**DE-A1-102007 021 526    JP-A- 2002 303 145**
**US-A1- 2008 087 017    US-B1- 6 176 082**

EP 2 488 732 B1

**Beschreibung**

Die vorliegende Erfindung bezieht sich auf eine Vorrichtung zur Lastregelung von Motoren. Insbesondere bezieht sich die Erfindung auf die Lastregelung von mit Turboladern aufgeladenen Motoren wie zum Beispiel Gasmotoren.

Turbolader werden in Motoren eingesetzt, um die Luft, die dem Motor zur Verbrennung zugeführt wird, zu verdichten und somit einen höheren Wirkungsgrad zu erhalten. Dabei wird das Abgas des Motors genutzt, um eine Turbine anzutreiben, die wiederum den Verdichter antreibt.

Ferner erfolgt bei vielen Motoren, wie zum Beispiel Ottomotoren eine Regelung der Last durch eine Drosselklappe, so dass die vom Verdichter komprimierte Luft vor dem Motor gedrosselt wird und somit nicht im Motor zum Einsatz kommt. Dadurch wird der Abgasmassenstrom verringert, was wiederum zu einer Verringerung der Turbinen- und Verdichterleistung führt.

Bei aufgeladenen Motoren, wie zum Beispiel hoch aufgeladenen Gasmotoren, ist diese Drosselklappe jedoch ein Hindernis bei der Erreichung des bestmöglichen Wirkungsgrades bzw. bei der Verbesserung des Wirkungsgrades, da der durch den Verdichter gewonnene Überdruck an der Drosselklappe zur Einregulierung der Leistung abgebaut wird. Die Turbine hat neben den Drosselverlusten auf der Saugseite zudem auch noch einen höheren Abgasgegendruck zu überwinden.

Eine weitere Möglichkeit zur Reglung der Verdichtung besteht darin, dass ein Teil des Abgasmassenstroms mittels einer Bypassleitung um die Turbine geleitet wird und somit nicht zum Antreiben der Turbine und somit auch des Verdichters beitragen kann. Das Vorbeileiten des Abgasmassenstroms neben der Abgasturbine wird auch als "Waste Gate" bezeichnet.

Eine derartige Reglung ist jedoch mit einer Regeleinheit, typischerweise in Form eines Ventils verbunden. Um eine genaue Regelung über ein Waste-Gate zu ermöglichen muss dieses Ventil jedoch zuverlässig und korrekt arbeiten. Hierbei ist zu berücksichtigen, dass die Regelung dauerhaft funktionieren sollte, um eine Kundenzufriedenheit zu gewährleisten. Ein defektes Ventil oder ein durch Verschleiß nicht mehr voll funktionstüchtiges Ventil führt zu einer schlechten bzw. fehlenden Regelung des Abgasmassenstroms.

Aus der DE 10 2007 021 526 A1 ist eine Abgaswärmenutzung zur beschleunigten Warmlaufphase bei Turbomotoren bekannt. Dabei umfasst eine Brennkraftmaschine, insbesondere für ein Kraftfahrzeug, einen Abgastrakt, einen in einem Abgasstrom der Brennkraftmaschine betriebenen Abgasturbolader und ein dem Abgasturbolader zugeordnetes erstes Wastegate. Dem Abgasturbolader ist ein zweites Wastegate zugeordnet, welches mit einem Kühlkreislauf verbunden ist.

In der DE 100 25 500 A1 wird eine Brennkraftmaschine mit einem Kühlkreislauf und einem an diesen angeschlossenen Heizungswärmetauscher beschrieben. Des Weiteren umfasst die Brennkraftmaschine einen durch eine Abgasleitung versorgbaren Abgaswärmetauscher, der einem Katalysator nachgeordnet ist und von aus dem Katalysator abströmendem Abgas Wärme für Heizungszwecke entnimmt und dem Heizungswärmetauscher zuführt. Ein zwischen der Brennkraftmaschine und dem Katalysator angeordneter Abgasturbolader ist wenigstens Bestandteil eines Abgaswärmetauschers. Dazu ist um ein Turbinengehäuse des Abgasturboladers eine Wand derart angebracht, dass ein von Kühlflüssigkeit durchströmbarer Hohlraum mit einem Einlassanschluss und einem Auslassanschluss zur Verfügung steht.

Aus der JP 2002303145 A ist ein Verbrennungsmotor mit einem Turbolader bekannt. Ein Turbinenteil des Turboladers ist derart an einer stromabwärtigen Seite eines Abgassammelteils eines Zylinderkopfs an einer Auslassöffnung angeordnet, dass eine Drehachse einer Rotorwelle des Turboladers orthogonal zu der Anordnungsrichtung der Zylinder ausgerichtet und etwa mittig zur Anordnungsrichtung positioniert ist. Ein Kompressor ist mittels eines Verbindungsteils, welches mittels eines Bolzens an einer Seite des Zylinderkopfes befestigt ist, vom Zylinderkopf beabstandet angeordnet. Ein Kühlwasserdurchlass ist in der Nähe der Auslassöffnung des Zylinderkopfs vorgesehen.

In der US 6,176,082 B1 wird eine Abgaskrümmerkühleinrichtung für eine Brennkraftmaschine beschrieben. Die Abgaskrümmerkühleinrichtung weist einen Turbolader, einen Abgaskrümmer einen Wärmetauscher und eine äußere Hülle auf. Abgas aus dem Motor durchströmt den Abgaskrümmer, den Turbolader und den Wärmetauscher. Die gekühlten Abgase durchströmen einen Kühlkanal, welcher den Abgaskrümmer umgibt und von diesem beabstandet ist. Wärme wird durch die Kühlung der Abgase absorbiert.

Aus der US 2008/0087017 A1 ist ein Verbrennungsmotor bekannt, welcher einen Wärmetauscher zwischen dem Abgasausgang und dem Turbolader aufweist.

In der EP 0 434 419 A2 werden ein Verfahren und eine Vorrichtung zur Wärmerückgewinnung in einem großen Dieselmotor beschrieben. Dabei ist zwischen dem Dieselmotor und dessen Turbolader ein Wärmetauscher angeordnet.

Der Erfindung liegt somit die Aufgabe zu Grunde, die gattungsgemäße Vorrichtung derart weiterzuentwickeln, dass sie die Nachteile des Stands der Technik überwindet, insbesondere einen erhöhten oder eine bestmöglichen Wirkungsgrad zu erhalten und Defekte oder Ungenauigkeiten bei der hierzu verwendeten Regelung zu vermeiden.

Die Aufgabe wird erfindungsgemäß durch eine Lastregelungsvorrichtung für einen Motor gelöst, wobei die Lastregelungsvorrichtung eine Abgasleitung zum Abführen eines Abgasmassenstroms vom Motor; eine Turbine, die durch einen von der Abgasleitung zugeführten Abgasmassenstrom angetrieben wird; eine Bypassleitung, die stromaufwärts von der Turbine von der Abgasleitung abzweigt, ein erstes Ventil zur Regelung und/oder Steuerung des Abgasmassenstroms; und eine stromaufwärts von dem ersten Ventil angeordnete Kühlvorrichtung zum Kühlen des Abgasmassenstroms aufweist. Typischerweise handelt es sich hierbei für die hierin beschriebenen Ausführungsformen um eine aktive Kühlvorrichtung. Die Lastregelungsvorrichtung umfasst ein zweites Ventil, insbesondere eine Drosselklappe, das stromabwärts nach dem Verdichter und vor dem Motor angeordnet ist, wobei das zweite Ventil die bzw. das dem Motor zugeführte Luft oder Luft/Kraftstoffgemisch steuert und/oder regelt. Dieses zweite Ventil kann zu Sicherheitszwecken dienen, aber auch in manchen Betriebzuständen, wie zum Beispiel während dem Hochfahren auf Hochlastbetrieb, die Funktion des ersten Ventils in der Bypassleitung ergänzen und/oder unterstützen.

Damit bezieht sich die Erfindung auf die vorteilhafte Kühlung des Abgases vor dem ersten Ventil (Waste Gate), so dass das Waste Gate bei relativ geringen Temperaturen arbeiten kann.

Die Erfindung ermöglicht somit einen Lastregelung des Motors, wie zum Beispiel in einem stationären Hochlastbetrieb, mittels des ersten Ventils zur Regelung des Abgasmassenstroms. Dabei kann der Motor ungedrosselt betrieben werden, was zu einem verbesserten Wirkungsgrad führt. Darüber hinaus schafft die Kühlung des Abgasstroms einen verminderten Verschleiß am Regelventil und somit eine verbesserte Zuverlässigkeit.

Erfindungsgemäß ist die Kühlvorrichtung zwischen der Abzweigung der Bypassleitung von der Abgasleitung und dem ersten Ventil angeordnet. Dies ermöglicht eine effiziente und zielgerichtete Kühlung des abgezweigten Abgasmassenstroms.

Nach einer weiteren Ausführungsform ist die Kühlvorrichtung ein Wärmetauscher. Dadurch wird gewährleistet, dass der Abgasmassenstrom auf einfache und kostengünstige Weise gekühlt werden kann.

Nach einem weiteren Aspekt der vorliegenden Erfindung umfasst das erste Ventil in einem Ventilgehäuse einen Ventilsitz, der eine Ventilöffnung umgibt und ein Ventilelement bzw. Ventilstellelement, wobei das Ventilelement bzw. Ventilstellelement zwischen einer ersten Extremposition, an dem das Ventilelement oder Ventilstellelement an dem Ventilsitz anliegt und einen Abgasmassenstrom durch das erste Ventil verhindert, und einer zweiten Extremposition, an dem die Ventilöffnung des ersten Ventils im Wesentlichen vollständig freigegeben ist, relativ zu dem Ventilsitz bewegbar ist. Durch die Größe der Öffnungsfläche der Ventilöffnung kann der Massenstrom des abgezweigten Abgasstroms geregelt werden. Dabei kann das Ventilstellelement des ersten Ventils derart ausgebildet sein, dass eine Öffnungsfläche des ersten Ventils unterschiedliche Größen aufweist, insbesondere bei einem Bewegen des Ventilstellelements zwischen der ersten Extremposition und der zweiten Extremposition.

In einer Ausführungsform, die mit anderen Ausführungsformen kombiniert werden kann, kann die Größe der Öffnungsfläche zwischen der ersten Extremposition und der zweiten Extremposition des Ventilstellelements kontinuierlich abnehmen, insbesondere zumindest Abschnittsweise, beispielsweise vollständig, linear abnehmen. Beispielsweise kann ein linearer Abschnitt mindestens 30% des Stellweges, insbesondere mindestens 40% des Stellweges umfassen. Unter linear wird beispielsweise Verstanden, dass ein Verstellweg des Ventilstelleelements linear mit der Veränderung der Öffnungsfläche zusammenhängt.

In einer bevorzugten Ausführungsform der vorliegenden Erfindung ist zwischen der ersten Extremposition und der zweiten Extremposition eine Vielzahl von Zwischenpositionen einstellbar, so dass z.B. eine stufenlose Regelung der Last ermöglicht wird.

Erfindungsgemäß umfasst die Lastregelvorrichtung eine Regel- und/oder Steuervorrichtung zur Steuerung und/oder Regelung des ersten Ventils und optional auch des zweiten Ventils. Dies kann helfen, die komplexen Regelungs- und Steuertätigkeiten korrekt einzusetzen.

Gemäß einer bevorzugten Ausführungsform, ist die Regel- und/oder Steuereinrichtung eingerichtet, eine Regelung des ersten Ventils für den Abgasmassestrom durchzuführen während, typischerweise im Hochlastbetrieb, eine Reglung der Drosselklappe nicht erfolgt. Typischerweise kann die Stellung Drosselklappe im Zusammenhang mit dem stationären Betriebszustand nur überwacht werden, wird jedoch nicht zur Regelung der Last hinzugezogen.

In einer weiteren Ausführungsform ist die Regel- und/oder Steuervorrichtung eingerichtet, dass als Regelgröße vor der Übergabe der Lastregelung von der Drosselklappe auf das Abblasventil die Druckdifferenz an der Drosselklappe zur Anwendung kommt. Im Allgemeinen ist die Regel- und/oder Steuervorrichtung eingerichtet, die Steuerung und/oder die Regelung des ersten Ventils und/oder des zweiten Ventils in Abhängigkeit einer Druckdifferenz am zweiten Ventil durchzuführen. Dadurch wird eine individuelle Regelung ermöglicht. Beispielsweise wird die Druckdifferenz der Drücke strömungstechnisch stromaufwärts und stromabwärts von dem zweiten Ventil zur Steuerung und/oder Regelung verwendet.

Bei einer Ausführungsform ist die Regelund/oder Steuervorrichtung eingerichtet, die Steuerung und/oder die Regelung des ersten Ventils und/oder des zweiten Ventils in Abhängigkeit eines Referenzsignals der Wellendrehzahl der Turbine durchzuführen. Dies ermöglicht eine Bestimmung des Einflusses der Lastregelmaßnahmen.

Typischerweise erfolgt eine Kühlung durch den Wärmetauscher ohne eine zusätzliche Regelung der Kühlung. Andererseits ist es aber möglich, z.B. über die Durchflussmenge des Kühlfluids in einem Wärmetauscher Einfluss auf die Kühlung zu nehmen. Daher ist nach einem weiteren Aspekt der vorliegenden Erfindung die Regel- und/oder Steuervorrichtung eingerichtet, die aktive Kühlvorrichtung zu regeln und/oder zu steuern. Insbesondere kann die Regel- und/oder Steuervorrichtung die Kühlvorrichtung in Abhängigkeit einer oder mehrerer Abgaseigenschaften steuern und/oder regeln. Dadurch kann die Temperatur des Abgasmassenstroms in der Bypassleitung eingestellt werden.

Nach einer Ausführungsform ist die Lastregelungsvorrichtung eingerichtet, in einem Gasmotor verwendet zu werden. In einer weiteren Ausführungsform ist die Lastregelungsvorrichtung eingerichtet, in einem Otto-Motor verwendet zu werden.

Bei einer Ausführungsform ist der Motor eingerichtet, in einer Biogasanlage verwendet zu werden. Dadurch können Biogasanlagen noch effektiver gestaltet werden und die umweltfreundliche Energiegewinnung wird attraktiver.

Eine Ausführungsform der vorliegenden Erfindung ist so gestaltet, dass die Bypassleitung stromabwärts nach der Turbine in ein Abgassystem des Motors und/oder der Turbine mündet. Dadurch wird ein einfaches Ablassen des in der Bypassleitung abgezweigten Abgasmassenstroms ermöglicht.

In einem zweiten Aspekt wird die Aufgabe erfindungsgemäß auch durch ein Verfahren zur Lastregelung eines Motors gelöst. Das Verfahren umfasst kontrolliertes Abblasen von Abgas vor der Turbine, und Kühlen eines dem Abblasventil zugeführte Abgasmassenstrom. Typischerweise kann ein Verdichter zum Verdichten von Luft oder ein Luft/Kraftstoffgemisch in einem Ansaugtrakt des Motors, eine Abgasleitung zum Abblasen bzw. Abführen eines Abgasmassenstroms vom Motor, eine Turbine, die durch einen von der Abgasleitung zugeführten Abgasmassenstrom angetrieben wird und die den Verdichter antreibt, bereitgestellt werden. Das Verfahren kann weiterhin typischerweise umfassen das Abzweigen eines Teils des Abgasmassenstroms stromaufwärts von der Turbine, wobei der abgezweigte Abgasmassenstrom in einer Bypassleitung mittels eines ersten Ventils geregelt und/oder gesteuert wird, wobei das Kühlen des abgezweigten Abgasstroms stromaufwärts von dem ersten Ventil erfolgt. Erfindungsgemäß wird eine Öffnungsfläche bzw. eine Öffnungsflächengröße des ersten Ventils derart gesteuert und/oder geregelt, dass während der Lastregelung ein zweites Ventil, das stromabwärts hinter dem Verdichter angeordnet ist, komplett geöffnet ist. Dadurch kann eine Maximierung des Wirkungsgrades realisiert werden, da die Drosselklappe immer komplett geöffnet bleiben kann.

Gemäß einem Aspekt der vorliegenden Erfindung kann, obwohl dies nicht notwendig ist, das Kühlen des abgezweigten Abgasmassenstroms geregelt und/oder gesteuert werden, insbesondere in Abhängigkeit von Abgaseigenschaften. Nach einer weiteren Ausführungsform erfolgt die Kühlsteuerung und/oder -regelung des abgezweigten Abgasmassenstroms in Abhängigkeit des Taupunktes des Abgases und/oder eines Bestandteils des Abgases. Dies ermöglicht einen optimalen Massendurchfluss durch das Ventil und gewährleistet eine maximale Betriebsdauer des Ventils. Gemäß einer typischen Ausführungsform kann die Kühlung so dimensioniert sein, dass auch ohne eine Regelung oder Steuerung eine Kühlung derart stationär zur Verfügung gestellt werden kann, dass die hierin beschriebenen Temperaturbereiche, zum Beispiel ca. 10°C -50°C oberhalb des Taupunktes des Abgases zur Verfügung gestellt werden können.

In einer Ausführungsform der vorliegenden Erfindung wird der abgezweigte Abgasmassenstrom in Abhängigkeit eines Säuretaupunkts gekühlt. Dies ist zum Beispiel in Biogasanlagen von Vorteil. Nach einem Aspekt wird die Temperatur des Abgasmassenstroms derart gesteuert, geregelt oder für einen typischen stationären Betrieb mit einer fest vordimensionierten Kühleinheit so zur Verfügung gestellt, dass sie den Taupunkt und/oder den Säuretaupunkt überschreitet. Dadurch können Ablagerungen von Bestandteilen des Abgases in dem ersten Ventil verhindert werden.

In einer Ausführungsform der vorliegenden Erfindung, falls eine Steuerung vorliegen sollte, wird die Temperatur des abgezweigten Abgasmassenstroms auf eine Soll-Temperatur gesteuert und/oder geregelt, wobei die Soll-Temperatur insbesondere über dem Säuretaupunkt ist, insbesondere über 5-20°C über dem Säuretaupunkt ist. Die Soll-Temperatur kann somit Grundlage für die Regelung der Kühlung sein.

Nach einer Ausführungsform wird die Regelung und/oder Steuerung der Kühlung mit einer Genauigkeit des Temperaturbereichs zwischen 1°C und 10°C, insbesondere zwischen 1°C und 5°, bevorzugterweise zwischen 1°C und 3°C, insbesondere um die Soll-Temperatur durchgeführt. Dadurch wird das Risiko vermindert, dass unerwünschte Ablagerungen durch Temperaturschwankungen im Ventil auftauchen.

In einer Ausführungsform des Lastregelungsverfahren nach der Erfindung wird die Regelung des ersten Ventils mit der Regelung eines zweiten Ventils, insbesondere einer Drosselklappe, das stromabwärts hinter dem Verdichter angeordnet ist, insbesondere für nicht stationäre Betriebszustände, z.B. das Erreichen eines stationären Betriebszustandes kombiniert. Insbesondere werden das erste und das zweite Ventil in Abhängigkeit voneinander geregelt und/oder gesteuert. Dadurch können beide, das erste und das zweite Ventil in Abhängigkeit voneinander eingestellt werden.

Nach einer Ausführungsform wird eine Öffnungsflächengröße des Ventils und für manche Betriebszeiten optional auch des zweiten Ventils in Abhängigkeit eines Referenzsignals der Wellendrehzahl der Turbine geregelt und/oder gesteuert. Dadurch wird ein direkter Einfluss der Regelung und/oder Steuerung kontrolliert.

Die Erfindung beschreibt in einem weiteren Aspekt die Regelung und/oder die Steuerung des ersten Ventils und/oder des zweiten Ventils in Abhängigkeit der Druckdifferenz an der Drosselklappe.

Nach einem Aspekt der vorliegenden Erfindung wird eine Öffnungsflächengröße des ersten Ventils in der Bypassleitung in einer ersten Betriebsphase gesteuert, insbesondere schrittweise gesteuert und dann in einer zweiten Betriebsphase geregelt. Nach einer weiteren Ausführungsform wird die Öffnungsflächengröße des Ventils in der ersten Betriebsphase in einem Stellvorgangsmodus gesteuert. In einer Ausführungsform der vorliegenden Erfindung werden in der ersten Betriebsphase diskrete Zwischenpositionen und/oder Öffnungsflächengrößen des ersten Ventils angesteuert.

In einem dritten Aspekt umfasst die vorliegende Erfindung ein Verfahren wie es oben beschrieben wurde zum Betreiben einer Lastregelvorrichtung, wie sie oben beschrieben wurde.

Weitere vorteilhafte Ausführungsformen, Ausgestaltungen und Aspekte, der vorliegenden Erfindung ergeben sich aus den abhängigen Patentansprüchen, der Beschreibung und den beiliegenden Zeichnungen.

Es zeigen:

Figur 1 eine Schemazeichnung einer Lastregelungsvorrichtung nach einer Ausführungsform der vorliegenden Erfindung;

Figur 2 eine Schemazeichnung einer Lastregelungsvorrichtung mit Regel- und/oder Steuervorrichtung nach einer Ausführungsform der vorliegenden Erfindung;

Figur 3a eine Schnittansicht eines Kühlvorrichtung mit dem ersten Ventil in der Bypassleitung nach einer Ausführungsform der vorliegenden Erfindung;

Fig. 3b eine schematische 3D Ansicht einer Kühlvorrichtung mit dem ersten Ventil nach einer Ausführungsform der vorliegenden Erfindung;

Fig. 3c eine schematische 3D Schnittansicht einer Kühlvorrichtung mit dem ersten Ventil nach einer Ausführungsform der vorliegenden Erfindung;

Fig. 4a eine schematische Schnittansicht eines Ausschnitts des ersten Ventils nach einer Ausführungsform der vorliegenden Erfindung;

Fig. 4b eine schematische Draufsicht des in Fig. 4a gezeigten Ausschnitts nach einer Ausführungsform der vorliegenden Erfindung;

Fig. 5 zeigt eine perspektivische Ansicht einer Ausführungsform einer Kühlvorrichtung;

Fig. 6a eine Halbschnitt/Explosionsansicht eines ersten Ventils einer weiteren Ausführungsform;

Fig. 6b eine Schnittansicht der Ausführungsform des Ventils gemäß Fig. 6a;

Fig. 7a eine Querschnittsansicht eines ersten Ventils einer anderen Ausführungsform;

Fig. 7b eine perspektivische Ansicht des Ventilkörpers des ersten Ventils von Fig. 7a;

Fig. 8a eine perspektivische Ansicht einer weiteren Ausführungsform eines ersten Ventils; und

Fig. 8b eine Schnittansicht des ersten Ventils gemäß der Ausführungsform aus Fig. 8a.

Die folgende Beschreibung bezieht sich beispielhaft auf Gasmotoren, kann aber auch auf andere Motoren angewendet werden. Die jeweiligen Anpassungen für die verschiedenen Motortypen werden nur kurz beschrieben. Es sollte verstanden werden, dass ein Motor anderer Bauart mit der Lastregelungsvorrichtung der vorliegenden Erfindung ausgestattet werden kann und gegebenenfalls angepasst werden kann.

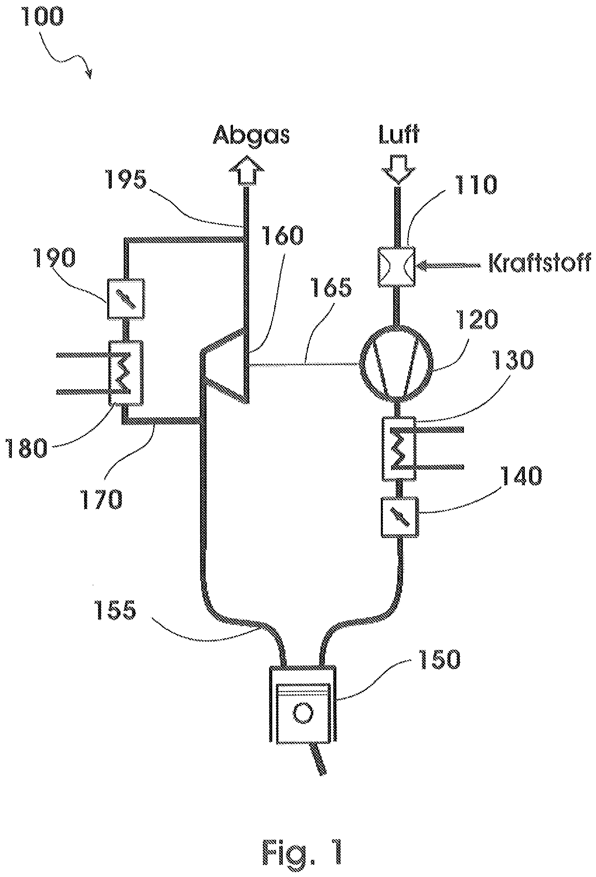

Figur 1 zeigt eine schematische Darstellung einer Ausführungsform der vorliegenden Erfindung. Luft wird in einem Mischer 110 mit Kraftstoff gemischt. In der in Figur 1 dargestellten Ausführungsform wird Luft mit Gas, wie zum Beispiel Biogas, vermischt, bevor die Luft in den Motor 150 eintritt.

Der Motor 150 ist in Figur 1 nur schematisch anhand eines Kolbens gezeigt. Dabei ist der Motor nicht auf die gezeigte beispielhafte Ausführungsform beschränkt, sonder kann ein Motor jeglicher Bauart sein. Zum Beispiel kann der Motor 150 ein Dieselmotor oder ein Ottomotor sein. Wird der Motor 150 z.B. mit Diesel angetrieben, kann die Mischvorrichtung 110 an einer anderen Stelle angeordnet sein. Im Fall eines Ottomotors, der mit Benzin angetrieben wird, kann die Mischvorrichtung 110 wegfallen, da die Kraftstoffeinspritzung direkt in den Brennraum oder in das Saugrohr erfolgt.

Die Pfeile in Figur 1 bezeichnen die Strömungsrichtung. Luft bzw. das Luft-Gas-Gemisch strömt zum Motor 150 hin und Abgas strömt vom Motor 150 weg.

Stromabwärts nach dem Mischer 110 ist ein Verdichter 120 angeordnet, der das Luft-Gas-Gemisch verdichtet. Das verdichtete Luft-Gas-Gemisch wird in einer typischen, beispielhaften Ausführungsform in einem Zwischenkühler 130 gekühlt. Der Zwischenkühler 130 kann auch als Ladeluftkühler bezeichnet werden. Eine Drosselklappe 140, die wiederum stromabwärts nach dem Zwischenkühler 130 angeordnet ist, kann den Massenstrom des verdichteten Luft-Gas-Gemisches regulieren. Die Drosselklappe 140 kann auch der Sicherheit dienen, um einen unerwünschten Überdruck zu vermeiden.

Der verdichtete, gekühlte und regulierte Massenstrom des Luft-GasGemischs wird dann im Motor 150 verbrannt. Das verbrannte Luft-Kraftstoff-Gemisch, das Abgas, wird durch eine Abgasleitung 155 vom Motor weggeführt. Das Abgas wird einer Turbine 160 zugeführt und treibt diese an.

Die Turbine 160 treibt den Verdichter 120 an, was zum Beispiel durch eine Verbindung der Turbine 160 mit dem Verdichter 120 mittels einer Welle 165 geschieht.

Stromaufwärts von der Turbine 160 zweigt eine Bypassleitung 170 von der Abgasleitung 155 ab. Die Bypassleitung 170 ist ausgelegt, einen Teil des Gesamtmassenstroms des Abgases aufzunehmen. Gemäß einer anderen Ausführungsform kann die Bypassleitung 170 auch dafür ausgelegt sein, den Gesamtmassenstrom des Abgases aufzunehmen.

In der Bypassleitung 170 sind stromaufwärts eine Kühlvorrichtung 180 und ein erstes Ventil 190 angebracht. Die Kühlvorrichtung 180 kann zum Beispiel ein Wärmetauscher sein. Das erste Ventil 190 wird auch als Waste Gate-Ventil bezeichnet. Das erste Ventil 190 dient dazu, den Massenstrom durch die Turbine 160 und durch die Bypassleitung 170 zu regeln. Gemäß einer Ausführungsform der vorliegenden Erfindung findet die Regelung des Massenstroms durch das erste Ventil 190 stromabwärts nach der Kühlvorrichtung statt. Durch die Kühlung des in der Bypassleitung abgezweigten Teilmassenstroms des Abgases, kann Verschleiß am Ventil verringert werden, so dass das erste Ventil 190 dauerhaft präzise und zuverlässig betätigt werden.

Gemäß manchen Ausführungsformen kann die Drosselklappe beim Hochfahren auf Last des Motors verwendet werden. Zum Beispiel kann der Motor mit Lastregelung über die Drosselklappe gestartet werden. Wird der Motor auf Last gefahren, wird das erste Ventil, d.h. das Waste-Gate und die Drosselklappe aufgefahren. Anschließend wird das Waste-Gate kontinuierlich oder stufenweise geschlossen, zum Beispiel zuerst in einem Stellvorgangsmodus, optional mit Einzelschritten. Anschließend, wenn man in einem Bereich des optimalen Ladedrucks oder beim optimalen Ladedruck des Motors angelangt ist, übernimmt der Regelkreis die Steuerung des Waste-Gates.

Bei Biogasanlagen zum Beispiel kann die Abkühlung wegen des im Biogas enthaltenen $H_2S$ (Verbrennungsprodukt $SO_2$) durch eine zweckmäßige Auslegung eines Wärmetauschers auf ein Temperaturniveau knapp oberhalb des Säuretaupunktes erfolgen. Dadurch kann eine Kondensation von im Abgas enthaltenen Stoffen verhindert werden und das erste Ventil kann dauerhaft präzise arbeiten, was unter anderem auch die Betriebszeit des ersten Ventils verlängert. Die im Abgas enthaltene Wärme kann nach einer Ausführungsform der vorliegenden Erfindung unmittelbar in die Wärmeauskopplung der Biogasanlage eingebunden werden.

Weiterhin wird durch die Kühlung des Teilmassenstroms die Effektivität des ersten Ventils erhöht, da das durch die Kühlung verdichtete Abgas schneller durch die Öffnungsfläche des ersten Ventils 190 abgelassen werden kann. Dadurch wird generell die Reaktionszeit der Regelung verkürzt und die Leistung verbessert. Die Öffnungsfläche des Ventils kann auch als Öffnungsquerschnitt bezeichnet werden.

Nach einer Ausführungsform der vorliegenden Erfindung wird das erste Ventil 190 selbst nicht aktiv gekühlt, so dass das erste Ventil bei der durch den Teilmassenstrom des Abgases vorgegebenen Temperatur arbeitet. Hierdurch kann eine Kondensatbildung im Ventilbereich verhindert wird.

Nach einer Ausführungsform kann die Drosselklappe 140 in Bezug auf das erste Ventil 190 auch als zweites Ventil 140 bezeichnet werden. Das zweite Ventil 140 ist nicht auf die Ausführungsform einer Drosselklappe beschränkt und kann ein beliebiges Ventil sein, das die funktionellen Merkmale erfüllt.

Nach einer Ausführungsform der vorliegenden Erfindung, die mit anderen hierin beschriebenen Ausführungsformen kombiniert werden kann, ist das erste Ventil 190 so ausgelegt, dass ein Öffnungsquerschnitt oder die Größe einer Öffnungsfläche kontinuierlich verändert werden kann. Mit anderen Worten ist es mit dem Ventil nach Ausführungsformen der vorliegenden Erfindung möglich, den Teilmassenstrom des Abgases stufenlos zu regeln.

Gemäß einem Aspekt der vorliegenden Erfindung kann der Öffnungsquerschnitt des Ventils kontinuierlich zwischen zwei Exrempositionen verändert werden. Die zwei Extrempositionen können z.B. die Position "komplett offen" und "komplett geschlossen" sein. Dadurch könnte jeder beliebige Abgasteilmassenstrom durch den Öffnungsquerschnitt bei Bedarf bereit gestellt werden. Eine Zwischenposition, als eine Position sollte verstanden werden, die beliebig zwischen den Extrempositionen liegen kann.

Der durch das erste Ventil geregelte Teilmassenstrom des Abgases wird stromabwärts nach der Turbine 160 einem Abgassystem 195 zugeführt. Auch der Teilmassenstrom des Abgases, der die Turbine 160 passiert hat, kann diesem Abgassystem 195 zugeführt werden. Das Abgassystem 195 kann zum Beispiel einen oder mehrere Katalysatoren oder ähnliches umfassen. Vereinfacht ist hier nur eine Leitung 195 gezeigt, die das Abgas wegführt.

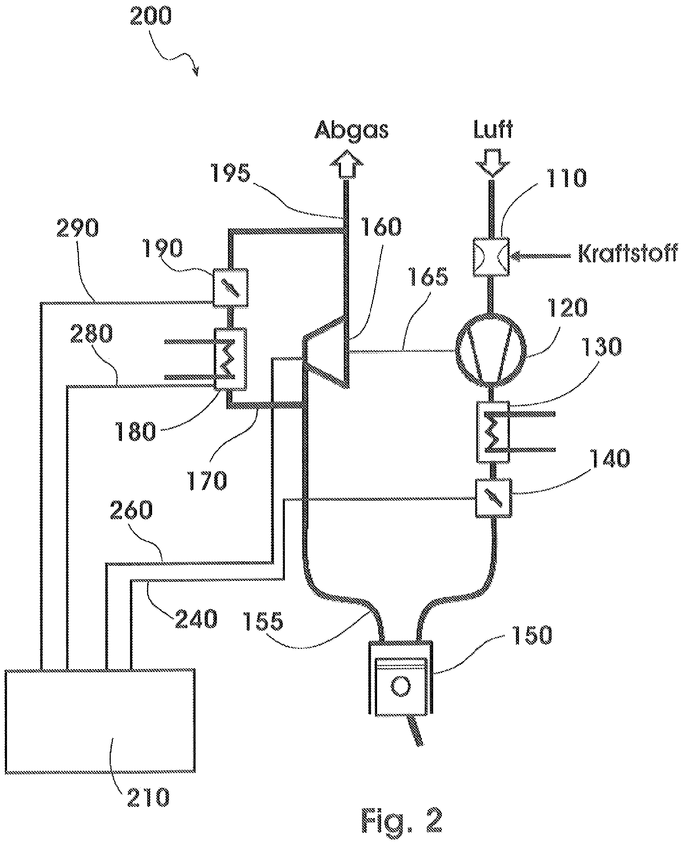

In einigen Ausführungsformen der vorliegenden Erfindung, die mit anderen Ausführungsformen kombiniert werden können, umfasst die vorliegende Erfindung eine Regel- und/oder Steuervorrichtung. In Figur 2 ist beispielhaft eine Lastregelungsvorrichtung 200 mit Regel- und/oder Steuervorrichtung 210 nach einer Ausführungsform der vorliegenden Erfindung gezeigt. Die Regel- und/oder Steuervorrichtung 210 ist in diesem in Figur 2 gezeigten Beispiel durch eine Verbindung 290 mit dem ersten Ventil 190 verbunden. Die Regel- und/oder Steuervorrichtung 210 ist dafür ausgelegt, zumindest die Ventilöffnung des Ventils 190 zu regeln und/oder zu steuern. Nach einer Ausführungsform der vorliegenden Erfindung kann die Regel- und/oder Steuervorrichtung ein Lastregelmanagement sein.

Nach einer weiteren optionalen Ausführungsform kann die Regel- und/oder Steuervorrichtung 210 auch mit der Kühlvorrichtung 180 durch eine Verbindung 280 verbunden sein. Dabei ist eine Regelung mit einer Genauigkeit des Temperaturbereichs zwischen 1°C und 10°C, insbesondere zwischen 1°C und 5°, bevorzugterweise zwischen 1°C und 3°C möglich. Typischerweise kann die Kühlung aber auch bereits im Vorfeld so ausgelegt werden, dass in einem stationären Betriebszustand, die Kühlung eine optimale Temperatur am Wastegate ermöglicht. Eine Feinjustierung der Kühltemperatur kann je nach Umgebungsbedingungen bei der Inbetriebnahme oder Wartung des Motors erfolgen, zum Beispiel mit der Durchflussmenge des Kühlfluids im Wärmetauscher.

Nach einer bevorzugten Ausführungsform weist die Regel- und/oder Steuervorrichtung auch eine Verbindung 240 zur Drosselklappe 140 auf. Dadurch kann die Öffnungsweite der Drosselklappe 140 geregelt und/oder gesteuert werden.

Die hier beschriebenen Ausführungsformen der Erfindung dienen dazu, eine Lastregelung im stationären Hochlastbetrieb zu ermöglichen, wobei die Lastregelung nicht, bzw. nicht mehr, durch die Drosselklappe sondern durch das Abblaseventil (Waste Gate), d.h. das erste Ventil 190 erfolgt. Der Ottomotor kann dann durch dieses Konzept ungedrosselt und somit bei dem maximal möglichen Wirkungsgrad betrieben werden.

Zusätzlich sind jedoch auch andere Betriebsformen als der stationäre Hochlastbetrieb möglich. So kann in anderen Betriebsmodi das erste Ventil 190 und das zweite Ventil 140 in Kombination geregelt werden. Zum Beispiel wird das erste Ventil 190 in der Bypassleitung 170 zum Beispiel in Abhängigkeit des Öffnungszustandes des zweiten Ventils geregelt und/oder gesteuert.

Das erste Ventil kann im Allgemeinen so geregelt werden, dass das zweite Ventil komplett geöffnet betrieben werden kann. Dies ermöglicht eine maximale Effizienz, da die Regelung und/oder Steuerung der Turbinen- und Verdichterleistung durch das erste Ventil beeinflusst wird, ohne die Strömungs- und Druckverhältnisse nach dem Verdichter zu beeinflussen.

Nach einer bevorzugten Ausführungsform wird das erste Ventil 190 in einer ersten Betriebsphase die Regelungsarbeit von der Drosselklappe nach dem Erreichen der Volllast zuerst in einem Stellvorgangsmodus (zum Beispiel mit Einzelschritten) und dann erst durch den vorgesehenen Regelkreis übernehmen. Stellvorgangsmodus soll verstanden werden als eine Regelung, bei der die Öffnungsfläche oder der Öffnungsquerschnitt durch vorgegebene Schritte erweitert oder verengt wird. Die vorgegebenen Schritte können in Abhängigkeit des Motors, in dem die Lastregelungsvorrichtung verwendet wird und der Kennlinien des Motors und/oder des Turboladers einmalig ermittelt werden. Dabei übernimmt das erste Ventil die Regelungsarbeit des zweiten Ventils nach dem Erreichen der Volllast zuerst in einem Stellvorgangsmodus (bevorzugterweise in Einzelschritten) und dann erst in einer zweiten Betriebsphase mittels des vorgesehenen Regelkreises.

Dabei sollte verstanden werden, dass die erste und zweite Betriebsphase zwar in dieser Reihenfolge ausgeführt werden können, aber in einer anderen Ausführungsform je nach Situation die erste Betriebsphase wieder auf die zweite folgen kann.

Nach einer bevorzugten Ausführungsform ist die Regel- und/oder Steuervorrichtung auch über eine Verbindung 260 mit der Turbine 160 verbunden.

Die Verbindungen 240, 260, 280 und 290 können Verbindungen sein, die für einen Datentransfer ausgelegt sind. Nach einer weiteren Ausführungsform können die Verbindungen der Regel- und/oder Steuervorrichtung aber auch weitere Funktionen und/oder Elemente besitzen. Die schematisch gezeigten Verbindungen der Regel- und/oder Steuervorrichtung können zum Beispiel Messvorrichtungen oder lokale Speicher beinhalten.

Nach einer bevorzugten Ausführungsform kann die Regel- und/oder Steuervorrichtung durch die Verbindungen 240, 260, 280 und 290 Daten erfassen und bewerten. Zum Beispiel kann die Regel- und/oder Steuervorrichtung 210 durch die Verbindung 260 ein Referenzsignal der Turbinendrehzahl erfassen und dazu verwenden, die Lastregelung durchzuführen, d.h. die Wellendrehzahl des Turboladers wird als Regelgröße verwendet. Der Begriff "Referenzsignal" steht hier für ein Signal, das einen Bezug zu der zu messenden Größe hat oder sogar die zu messende Größe selbst ist.

Der Begriff "Regelgröße" bezieht sich in dieser Beschreibung auf einen Regelparameter, der dazu verwendet wird, die benötigte Regelung zu berechnen, um einen erwünschten Zustand zu erhalten. Aus einer Veränderung der Regelgröße kann die Wirksamkeit einer zur Regelung durchgeführten Maßnahme überprüft werden. Der durch die geänderte Regelgröße erfasste Zustand kann wiederum weitere Regelvorgänge auslösen.

Nach einer anderen Ausführungsform kann die Regel- und/oder Steuervorrichtung 210 durch die Verbindung 240 die Druckdifferenz an der Drosselklappe 140 ermitteln oder eine Messung der Druckdifferenz veranlassen. Die Druckdifferenz kann dann von der Regel- und/oder Steuervorrichtung verwendet werden, die Lastregelung geeignet und angepasst durchzuführen. Dabei kommt die Druckdifferenz typischerweise vor der Übergabe der Lastregelung von der Drosselklappe auf das erste Ventil als Regelgröße zur Anwendung.

Durch hierin beschriebene Ausführungsformen der Erfindung kann verhindert werden, dass im Fall von z.B. hoch aufgeladenen Gasmotoren die Drosselklappe, das hier beschriebene zweite Ventil, ein Hindernis bei der Erreichung des bestmöglichen oder verbesserten Wirkungsgrades darstellt, da der durch den Verdichter gewonnene Überdruck an der Drosselklappe zur Einregulierung der Leistung abgebaut werden muss. Die Turbine hat neben den Drosselverlusten auf der Saugseite zudem auch noch einen höheren Abgasgegendruck zu überwinden. Im Allgemeinen kann ein Waste Gate bei Dieselmotoren bzw. auch bei kleinen Ottomotoren verwendet werden um einen hohen Ladedruck im unteren Drehzahlbereich zu ermöglichen. Die hier beschriebenen Ausführungsformen bieten durch die Kombination von Waste Gate und der Kühlung des Abgases, vor dem eingesetzten Waste Gate, d.h. dem hier beschriebenen ersten Ventil, den Vorteil, dass das Waste Gate bei relativ geringen Temperaturen arbeiten kann. Insbesondere kann bei dem Beispiel von Biogasanlagen, die gemäß typischen Ausführungsformen verwendet werden, die Abkühlung wegen des im Biogas enthaltenen $H_2S$ (Verbrennungsprodukt $SO_2$) durch eine zweckmäßige Auslegung eines Wärmetauschers auf ein Temperaturniveau knapp oberhalb des Säuretaupunktes erfolgen. Die enthaltene Wärme kann unmittelbar auch in die Wärmeauskopplung eines Energiegewinnungssystems eingebunden werden. Bei der Kombination aus Waste-Gate und Kühlung erfolgt die Lastregelung im stationären Hochlastbetrieb nicht mehr durch die Drosselklappe sondern durch das Abblasventil (Waste Gate). Der Ottomotor kann dann durch dieses Konzept ungedrosselt und somit bei dem maximal möglichen bzw. bei verbessertem Wirkungsgrad betrieben werden.

Es wird daher gemäß typischen Ausführungsformen eine Vorrichtung bzw. ein Verfahren zur Lastregelung von hoch aufgeladenen Ottomotoren auf Basis eines kontrollierten Abblasens von Abgas vor der Turbine zur Verfügung gestellt, wobei der dem Abblasventil zugeführte Abgasmassenstrom gekühlt wird. Hierzu wird zum Beispiel ein erstes Ventil zur Verfügung gestellt, das die Freigabe eines variablen Abblasquerschnittes ermöglicht. Wie bereits beschrieben kann gemäß alternativer oder zusätzlicher Implementierungen ein Lastregelmanagement zur Verfügung gestellt werden, das eine kombinierte Lastregelung von Drosselklappe mit dem Abblasventil ermöglicht. Hierbei erfolgt gemäß einer optionalen weiteren Ausführungsform die Regelung der Last bedarfsgerecht und jeweils wirkungsgradoptimiert.

Gemäß einer weiteren typischen Ausführungsform wird das Abgas wie oben beschrieben gekühlt, das erste Ventil zum Abblasen ist ungekühlt ausgeführt, um auch im Ventilbereich eine Kondensatbildung zu vermeiden. Hierzu kann gemäß einer weiteren alternativen oder zusätzlichen Modifikation die Bauart des Abblasventils durch eine Führung des Regelventilelementes einerseits durch den Verstellhebel und andererseits durch das Ventilgehäuse gekennzeichnet sein.

Gemäß weiteren Ausführungsformen kann die Abblasventilregelung auch zur Vermeidung des Verdichterpumpens (Überschreiten der Pumpgrenze) bei kalten Umgebungsbedingungen im gesamten Lastbereich (Temperatur- bzw. auf Basis eines Referenzsignals der Annäherung zur Pumpgrenze) bzw. bei Lastabwurf genutzt werden und/oder das Abblasventil kann die Regelungsarbeit von der Drosselklappe nach dem Erreichen der Volllast zuerst in einem Stellvorgangsmodus (bevorzugt Einzelschritte) und dann erst durch den vorgesehenen Regelkreis übernehmen.

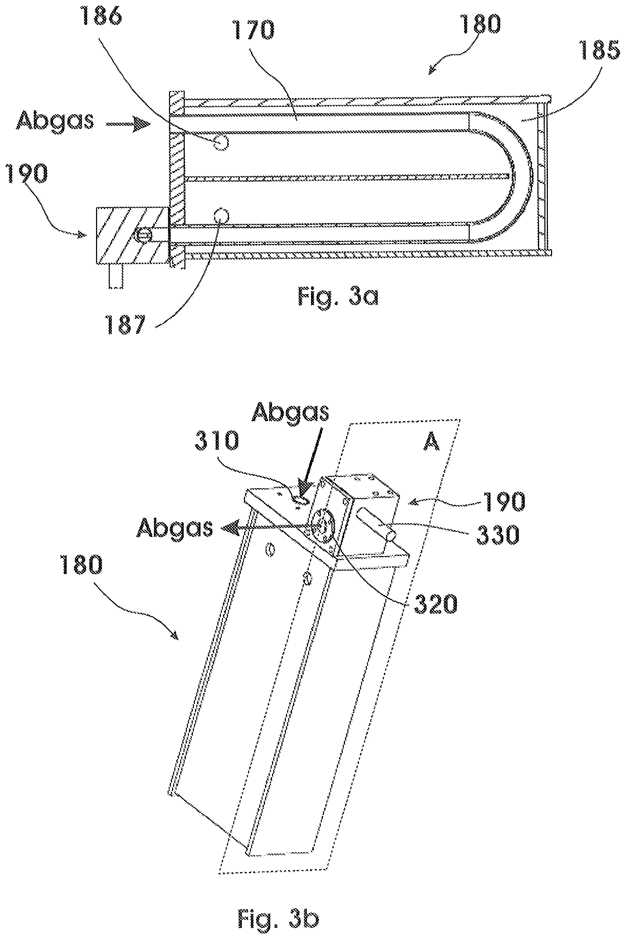

Figur 3a zeigt eine Schnittansicht einer Ausführungsform für die Kühlvorrichtung 180 mit erstem Ventil 190. Die Bypassleitung 170 führt in dieser Ausführungsform durch eine Kühlvorrichtung 185. In diesem Fall ist die Kühlvorrichtung 185 ein Wärmetauscher. Ein Wärmetauscher kann mit einem kühlendem Fluid gefüllt sein oder der von einen kühlenden Fluid durchströmt werden, das die Wärme des Teilmassenstroms des Abgases aufnimmt und von dem Abgas wegführt. In dieser Ausführungsform sind ein Fluideinlass 186 und ein Fluidauslass 187 gezeigt, durch die Fluid in den Wärmetauscher gelangt. Dabei ist nach dem Prinzip des Wärmetauschers das Fluid am Eingang 186 kühler als am Ausgang 187.

Figur 3b zeigt dieselbe Ausführungsform einer Kühlvorrichtung 180 wie Figur 3a in einer 3D Ansicht. In dieser Ansicht ist die Eintrittsöffnung 310 und die Austrittsöffnung 320 des Abgases in und aus der Kühlvorrichtung 180 erkennbar. Aus Figur 3b geht auch hervor, dass das erste Ventil 190 selbst nicht aktiv gekühlt wird. Ein Verstellhebel 330 ist an dem ersten Ventil 190 angebracht, um das erste Ventil bedienen zu können.

Nach anderen Ausführungsformen der vorliegenden Erfindung kann das erste Ventil auch durch einen anderen Mechanismus betätigt werden. Zum Beispiel kann das Ventil elektronisch oder magnetisch betätigt werden.

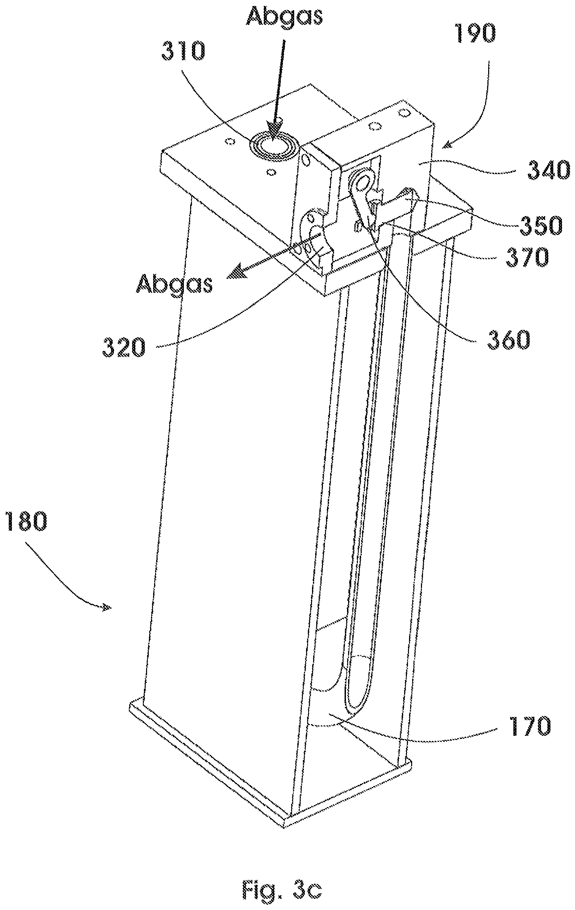

Figur 3c zeigt eine Schnittansicht in 3D der Ausführungsform der Figuren 3a und 3b. Dabei geht die Schnittebene entlang der Ebene A, wie sie in den Figur 3b eingezeichnet ist. Analog zu den Figuren 3a und 3b wird die Bypassleitung 170, die Kühlvorrichtung 180 und das erste Ventil 190 gezeigt.

Nach einer Ausführungsform der vorliegenden Erfindung umfasst das erste Ventil 190 ein Ventilgehäuse 340, ein Regelventilelement 350 und einen Verstellmechanismus 360, der mit dem Verstellhebel (in Figur 3c nicht zu sehen) verbunden ist. Gemäß einer typischen Ausführungsform ist das Abblasventil, d.h., das erste Ventil 190, durch eine Führung des Regelventilelementes einerseits durch den Verstellhebel und andererseits durch das Ventilgehäuse gekennzeichnet.

In der dargestellten, beispielhaften Ausführungsform wird der Verstellmechanismus 360 durch den Verstellhebel betätigt und bewirkt eine Bewegung des Regelventilelements 350. Nach einer bevorzugten Ausführungsform kann das Regelventilelement 350 die Form einer Pyramide oder eine pyramidenähnliche Form aufweisen. Pyramidenähnlich kann zum Beispiel ein Pyramidenstumpf sein oder eine andere, der Pyramide nachempfundene Form. Nach einem weiteren Aspekt kann das Regelventilelement 350 auch die Form eines Kegels oder eine kegelähnliche Form aufweisen. Kegelähnlich kann zum Beispiel ein Kegelstumpf sein oder eine andere, dem Kegel nachempfundene Form.

Nach weiteren Ausführungsformen der vorliegenden Erfindung wird das Regelventilelement 350 in eine, vorzugsweise runde, Bohrung 370 im Ventilgehäuse 340 ein- und/oder ausgeführt, um den Querschnitt der Bohrung 370 zu verändern. Dadurch wird der Massenstrom des Abgases geregelt, der durch das erste Ventil fließt.

Anders ausgedrückt wird das Regelventilelement 350 stufenweise oder auch stufenlos in die Bohrung 370 geschoben oder aus ihr herausgezogen. Der Querschnitt des Regelventilelements 350 und der vorzugsweise runden Bohrung 370 sind so ausgelegt, dass der Querschnitt der Bohrung 370 bei vollständig eingeführten Regelventilelement 350 komplett verschlossen ist, so dass kein Abgasmassenstrom das erste Ventil 190 passieren kann.

In einer bevorzugten Ausführungsform sorgt ein Ventilsitz dafür, dass die Bohrung 370 fest verschlossen ist.

Damit wird durch die Bauart des ersten Ventils 190 eine Führung des Regelventilelements 350 einerseits durch den Verstellhebel 330 und andererseits durch das Ventilgehäuse 340 ermöglicht.

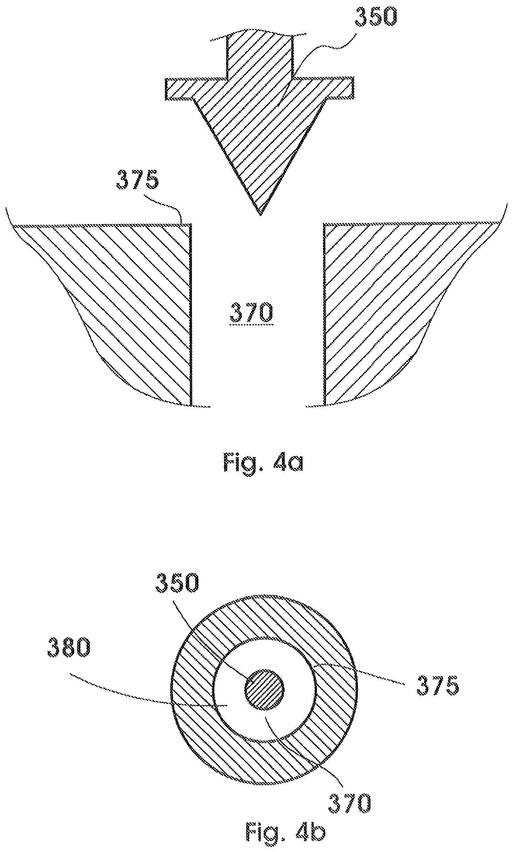

Figur 4a zeigt eine Seitenansicht eines Ausschnitts des ersten Ventils 190. Beispielhaft ist ein Regelventilelement 350 in Form eines Kegels gezeigt, der in die Bohrung oder Ventilöffnung 370 eingeführt werden kann. Ein Ventilsitz 375 sorgt für einen definierten Abschluss der Bohrung 370 bei vollständig eingeführten Regelventilelement 350. Dann ist das Ventil geschlossen. In Figur 4a befindet sich das Regelventilelement beispielhaft in einer Extremposition.

Figur 4b zeigt eine Schnittansicht einer Draufsicht der Ausführungsform aus Figur 4a in der Ebene des Ventilsitzes, wobei sich das kegelförmige Regelventilelement in einer Zwischenposition befindet. In der Zwischenposition wird die Ventilöffnung 370 nicht vollständig geschlossen. Zwischen dem in der Ebene des Ventilsitzes befindlichen Abschnitt des Ventilelements und dem Ventilsitz wird eine Öffnungsfläche 380 aufgespannt, die in Abhängigkeit der Eindringtiefe des Ventilelements variiert.

Gemäß einer weiteren Ausführungsform wird ein Verfahren zur Lastregelung eines Motors vorgestellt. Dabei wird ein Motor mit einem Turbolader, wie oben beschrieben, bereit gestellt. Nach dem Motor und vor der Turbine wird ein Teilmassenstrom des Abgases abgezweigt. Dieser abgezweigte Teilmassenstrom passiert eine Bypassleitung, wie sie oben beschrieben wurde.

Nach Ausführungsformen der vorliegenden Erfindung wird der abzuzweigende Teilmassenstrom des Abgases von einem ersten Ventil in der Bypassleitung geregelt. Bevor der abgezweigte Teilmassenstrom das erste Ventil erreicht, wird er gekühlt. Dies kann zum Beispiel mittels einer Kühlvorrichtung geschehen, wie sie in den Figuren 3a bis 3c dargestellt ist.

Nach einer Ausführungsform wird die Regelung von einer Regel- und/oder Steuervorrichtung durchgeführt, das wie in Figur 2 gezeigt ist, mit diversen Bauteilen der Lastregelvorrichtung verbunden sein kann, um mit diesen zu kommunizieren, diese zu beeinflussen und/oder bestimmte Parameter, wie Druckdifferenzen und Drehzahlen zu bestimmen.

Ausführungsformen der Regel- und/oder Steuervorrichtung können auch dazu verwendet werden, bestimmte Bauteile der Lastregelungsvorrichtung in Kombination und/oder in Abhängigkeit voneinander zu regeln, um die sich gegenseitig beeinflussenden Bauteile optimiert regeln zu können.

Die Regel- und/oder Steuervorrichtung kann auch dafür ausgelegt sein, das erste Ventil erst zu einem bestimmten Zeitpunkt zu beeinflussen, z.B. wenn die Drosselklappe bereits vollständig geöffnet ist. Vor dem Eingreifen der Regel- und/oder Steuervorrichtung kann das erste Ventil z.B. in einem Stellvorgangsmodus betrieben werden, wie er oben bereits näher beschrieben wurde.

Es hat sich gezeigt, dass die vorliegende Erfindung auch zur Vermeidung des Verdichterpumpens (Überschreiten der Pumpgrenze) bei kalten Umgebungsbedingungen im gesamten Lastbereich bzw. bei Lastabwurf genutzt werden kann.

Die vorliegende Erfindung kann derart eingesetzt werden, dass die Lastregelung im stationären Hochlastbetrieb nicht mehr durch die Drosselklappe, sondern durch das erste Ventil (Waste Gate) erfolgt. Ein Ottomotor kann dann beispielsweise durch diese Erfindung ungedrosselt und somit bei dem maximal möglichen Wirkungsgrad betrieben werden.

Zusätzlich kann durch die Lastregelvorrichtung und das Verfahren zur Lastregelung nach der vorliegenden Erfindung und die damit erzielten Effekte wie Kühlen des Teilmassenstroms des Abgases in der Bypassleitung eine bedarfsgerechte und wirkungsgradoptimierte Regelung ermöglicht werden. Durch die oben beschriebene Erfindung wurde zum Beispiel eine Wirkungsgraderhöhung des Motors von $\dfrac{3}{10}$ % erreicht.

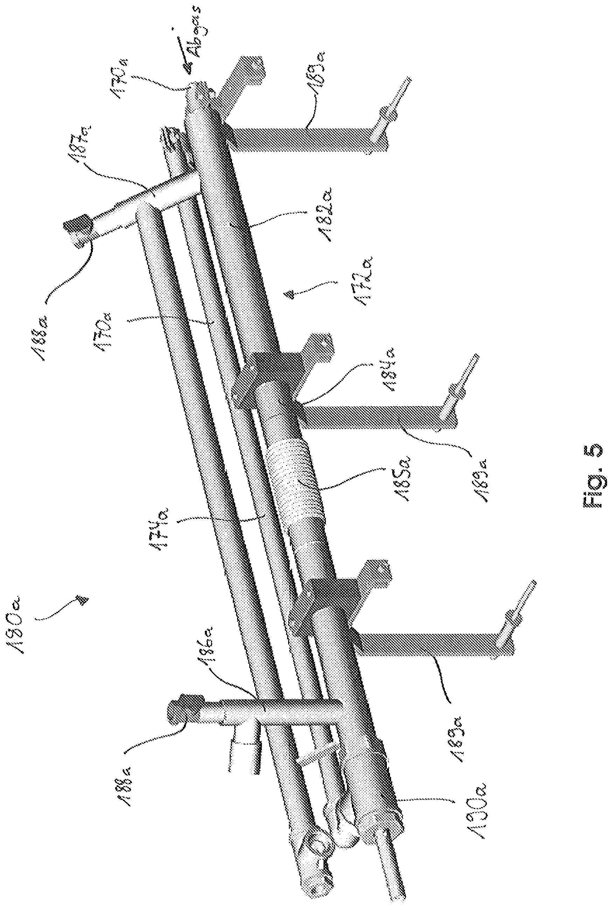

Fig. 5 zeigt eine weitere Ausführungsform einer Kühlvorrichtung 180a mit einem Wastegate oder ersten Ventil 190a. Die Kühlvorrichtung 180a arbeitet in Form eines Wärmetauschers. Das Abgas wird in einer zylindrischen Bypassleitung 170a geführt, die einen ersten, geradlinigen Abschnitt 172a, der stromaufwärts von dem Wastegate 190a angeordnet ist, und einen zweiten Abschnitt 174a stromabwärts von dem Wastegate 190a aufweist. In anderen Ausführungsformen kann die Bypassleitung auch nicht zylindrische Leitungsquerschnitte aufweisen. Ferner weist die Kühlvorrichtung 180a eine Wasserleitung 182a auf, die zum Kühlen des durch die Bypassleitung 170a fließenden Abgases dient. Ein geradliniger Kühlabschnitt 184a der Wasserleitung ist im Wesentlichen zylindrisch und umgibt den ersten Abschnitt 172a der Bypassleitung 170a konzentrisch. Der geradlinige Kühlabschnitt kann einen Kompensationsbereich 185a aufweisen, um eine Längenausdehnung des Kühlabschnitts 184a auszugleichen. Der Kühlabschnitt 184a kann auch andere Querschnittsformen aufweisen. Der Kühlabschnitt 184a weist an seinem dem Wastegate zugewandten Ende einen Kühlwasserabfluss 186a, durch den das durch das Abgas erwärmte Wasser abfließt, und an seinem dem Wastegate abgewandten Ende einen Kühlwasserzufluss 187a auf, durch den das Kühlwasser zugeführt wird. In einer typischen Ausführungsform hat der Kühlabschnitt eine Länge von 10mm bis 4000mm, insbesondere von 20mm bis 2000mm. Die Länge des Kühlabschnitts ist angepasst, um eine ausreichende Kühlung des Abgases vor dem Wastegate 190a zu gewährleisten, damit das Wastegate 190a bei relativ geringen Temperaturen arbeiten kann. Der Kühlwasserzufluss 187a und der Kühlwasserabfluss 186a können jeweils ein Absperrventil 188a aufweisen. In anderen Ausführungsformen kann der Kühlwasserzufluss an der dem Wastegate 190a zugewandten Ende des Kühlabschnitts 184a und der Kühlwasserabfluss an dem dem Wastegate abgewandten Ende des Kühlabschnitts 184a realisiert werden. Die Kühlvorrichtung 180a kann mit Halteelementen 189a befestigt werden. Statt Wasser kann in anderen Ausführungsformen auch ein anderes Kühlmittel verwendet werden.

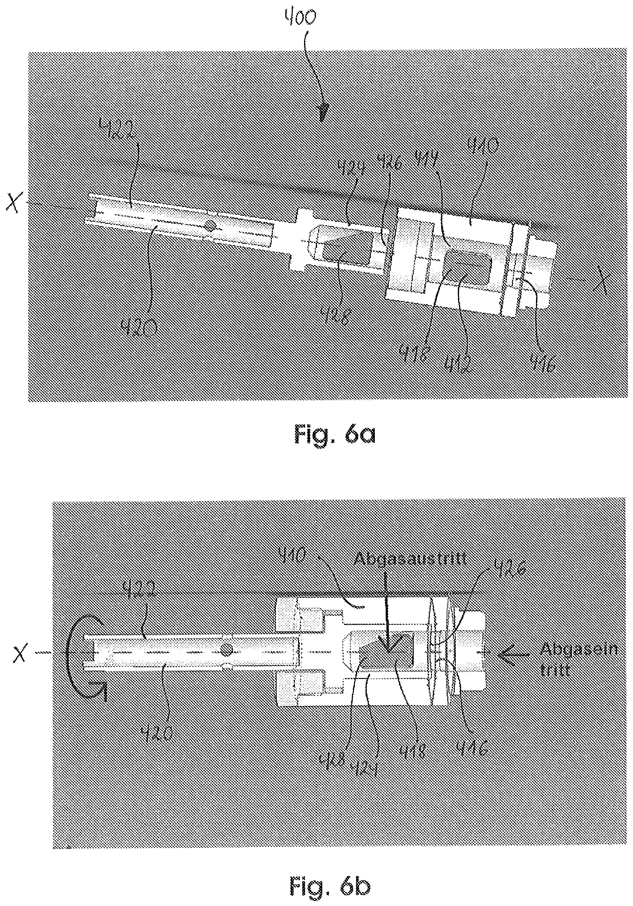

Fig. 6a und 6b zeigen eine Ausführungsform eines Wastegates oder ersten Ventils 400 in Form eines Drehventils, dass als Wastegate 190a in der in Fig. 5 gezeigten Kühlanordnung verwendet werden kann. Dabei zeigt Fig. 6a eine Halbschnitt/Explosionsansicht und Fig. 6b eine Schnittansicht der Ausführungsform des Ventils gemäß Fig. 6a. Das Wastegate 400 weist einen Grundkörper 410 und einen Ventilstellelement 420 auf, die eine gemeinsame Längsachse X aufweisen, die der Drehachse des Ventilstellelements 420 entspricht. Der Grundkörper 410 umfasst eine zylindrische Ventilkammer 412 mit einer Umfangswand 414. Die Ventilkammer 412 die über eine axiale Öffnung 416 mit einem ersten Abschnitt der Bypassleitung, beispielsweise dem ersten Abschnitt 172a aus Fig. 5, und über eine radiale Öffnung 418 in der Umfangswand 414 mit einem zweiten Abschnitt der Bypassleitung, beispielsweise dem zweiten Abschnitt 174a aus Fig. 5, verbunden. Daher kann über die axiale Öffnung 416, die insbesondere kreisförmig ist, Abgas in die Ventilkammer 412 einströmen. Die radiale Öffnung 418 ist in der in Fig. 6a und 6b gezeigten Ausführungsform im Wesentlichen rechteckig.

Das Ventilstellelement 420 weist eine Stellstange 422, die an einen nicht gezeigten Drehantrieb angeschlossen ist, und einen Ventilstellelementzylinder 424 auf, der rohrförmig geformt ist. Der Außenradius des Ventilstellelementzylinders 424 entspricht im Wesentlichen in Radius der Umfangswand 414, so dass der Ventilstellelementzylinder 424 gleitend in der Ventilkammer 412 bewegt bzw. gedreht werden kann. Der Ventilstellelementzylinder 424 weist ebenfalls eine axiale Öffnung 426 und eine radiale Öffnung 428 auf. Über die axiale Öffnung 426 strömt das Abgas in das Innere des Ventilstellelementzylinders 424.

Die axiale Öffnungen 418, 428 des Ventilstellelementzylinders 424 und des Grundkörpers 410 sind derart geformt, das eine Drehung des Ventilstellelements 420 um die Drehachse relativ zum Grundkörper 410 eine Veränderung des Überlappenden Teils der axialen Öffnungen 418, 428 hervorruft. Damit wird der Öffnungsquerschnitt bzw. die Öffnungsfläche des Wastegates 400 verändert.

Um eine besonders feine Regelung zu ermöglichen, weist die axiale Öffnung des Ventilstellelementzylinders 424 keine rechteckige, sondern eine dreieckige Öffnung auf, bei der zwei Kanten den Kanten der im Wesentlichen rechteckigen, radialen Öffnung 418 des Grundkörpers 410 entsprechen. In der in Fig. 6a und 6b gezeigten Ausführungsform weist die radiale Öffnung 428 des Ventilstellelementzylinders 424 eine fünfeckige Grundform auf, wobei zwei Kanten den Kanten der im Wesentlichen rechteckigen, radialen Öffnung 418 des Grundkörpers 410 entsprechen, und zwei Kanten einem Abschnitt der zwei andern Kanten der radialen Öffnung 418 des Grundkörpers entsprechen. Nicht nur die hier beschriebenen Formen können verwendet werden, sondern auch andere Formen von radialen Öffnungen sind möglich. Durch Verdrehen des Ventilstellelements 420 kann somit der Abgasstrom geregelt werden.

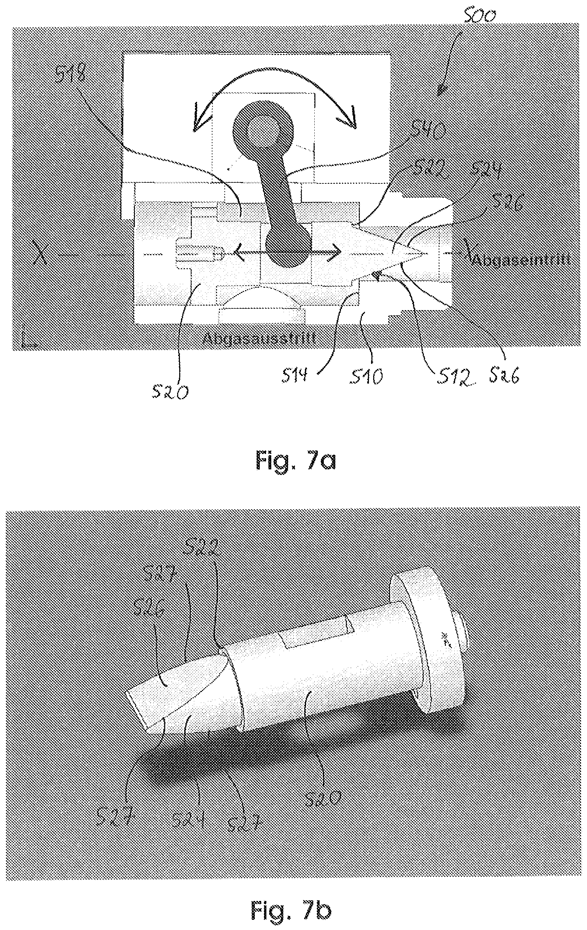

Fig. 7a und 7b zeigen eine weitere Ausführungsform eines Wastegates 500. Das Wastegate weist einen Grundkörper 510, einen in Axialrichtung X bewegbares Ventilstellelement 520 und einen Ventilhebel 540 zum Bewegen des Ventilstellelements 520 zwischen einer ersten Extremposition und einer zweiten Extremposition auf. Der Grundkörper 510 weist um eine axiale Ventilöffnung 512 herum einen Ventilsitz 514 auf, der mit einer Schulter 522 des Ventilstellelements 520 zusammenwirken kann, um ein Durchströmen von Abgas durch das Wastegate zu unterbinden wenn sich das Ventilstellelement 520 in einer der beiden Extrempositionen befindet.

Der Ventilsitz 514 in einer Radialebene angeordnet. Der Grundkörper 510 weist zusätzlich eine radiale Öffnung 516 auf, durch die das in eine Ventilkammer 518 einströmende Gas wieder herausströmen kann. Das Ventilstellelement 520 ist beweglich in der Ventilkammer 518 angeordnet.

Ferner weist das Ventilelement ein von der Schulter hervorragenden, im Betrieb in die axiale Ventilöffnung 512 hineinragenden Steuerkörper 524 auf. Dabei kann der Steuerkörper 524 die Ventilöffnung in einer der beiden Extrempositionen des Ventilstellelements die Ventilöffnung 512 vollständig verlassen.

Der Steuerkörper 524 umfasst zwei aufeinander zulaufende Steuerflächen 526, die eine gemeinsame Kante aufweisen. Die Seitenkanten 527 der Steuerflächen sind jeweils über einen Zylinderabschnitt 528 miteinander verbunden. Der Radius Zylinderabschnitt 528 kann dabei an den Radius der axialen Öffnung angepasst sein, bzw. diesem im Wesentlichen entsprechen. In anderen Ausführungsformen kann der Radius der Zylinderabschnitte kleiner als der Radius der axialen Öffnung sein. Der von der Schulter hervorragende Steuerkörper 524 weist eine im Wesentlichen kegelförmige oder pyramidenförmige Form auf, die es ermöglicht, den Abgasstrom genau zu regeln. In der in Fig. 7a und 7b wird über eine Linearbewegung des Ventilkegels oder Steuerkörpers der Öffnungsquerschnitt und somit der Abgasstrom geregelt. Gegenüber dem in Fig. 6a und 6b gezeigten Drehventil ist eine geringere Passungsfläche vorteilhaft, welche durch Ablagerungen oder Wärmeverzug zum Klemmen des Ventils führen kann. Ferner kann in geschlossener Stellung die Dichtigkeit besser durch spielfrei aufeinander liegende Dichtflächen gewährleistet werden, beispielsweise in Form des Ventilsitz 514 und der Schulter 522.

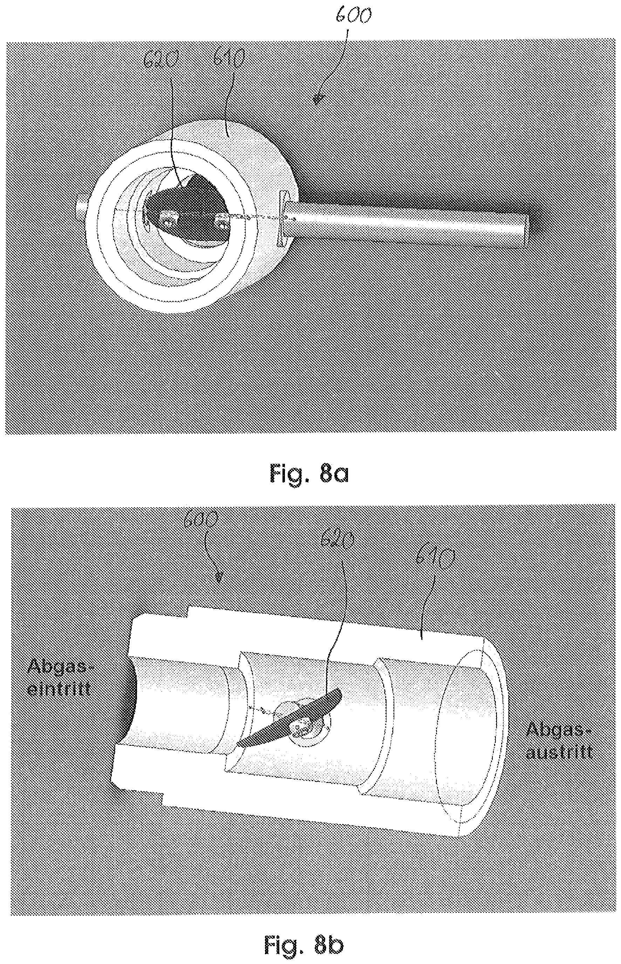

Fig. 8a und 8b zeigt eine weitere Ausführungsform eines Wastegates oder ersten Ventils 600. Das Wastegate weist einen rohrförmigen Grundkörper 610 auf, in dem eine drehbar gelagerte Drosselklappe 620 angeordnet ist, die über einen Antrieb bewegt werden kann. Der Innendurchmesser des rohrförmigen Grundkörpers 610 erweitert sich dabei stufenförmig in Strömungsrichtung des Abgases. Die Drosselklappe 620 derart ausgelegt, dass sie in einer ersten Drehposition den rohrförmigen Grundkörper vollständig verschließen kann und einer zweiten Drehposition einen Gasdurchfluss durch den rohrförmigen Grundkörper fast vollständig freigeben kann. In dem in Fig. 8 gezeigten Wastegate wird über eine Drehbewegung der frei werdende Querschnitt und somit der Abgasstrom variiert. Diese Ausführungsform ist günstig und weist wenige Bauteile auf.

**Patentansprüche**

1.  Lastregelungsvorrichtung (200) für einen Motor (150) umfassend

    einen Verdichter (120) zum Verdichten von Luft oder einem Luft/Kraftstoffgemisch in einem Ansaugtrakt des Motors (150);

    eine Abgasleitung (155) zum Abführen eines Abgasmassenstroms vom Motor (150);

    eine Turbine (160), die durch einen von der Abgasleitung (155) zugeführten Abgasmassenstrom angetrieben wird und die den Verdichter (120) antreibt;

    eine Bypassleitung (170, 170a), die stromaufwärts von der Turbine (160) von der Abgasleitung (155) abzweigt, wobei ein erstes Ventil (190, 190a, 400, 600) angeordnet ist, um zur Regelung und/oder Steuerung des Abgasmassenstroms in der Bypassleitung (170, 170a) zu dienen,

    eine stromaufwärts von dem ersten Ventil (190, 190a, 400, 600) angeordnete, Kühlvorrichtung (180, 180a) zum Kühlen des Abgasmassenstroms, und

    ein zweites Ventil (140), insbesondere eine Drosselklappe, das stromabwärts nach dem Verdichter (120) und vor dem Motor (150) angeordnet ist, wobei das zweite Ventil (140) die bzw. das dem Motor (150) zugeführte Luft oder Luft/Kraftstoffgemisch steuert und/oder regelt,

    **dadurch gekennzeichnet, dass** die Kühlvorrichtung (180, 180a) zwischen der Abzweigung der Bypassleitung (170, 170a) von der Abgasleitung (155) und dem ersten Ventil (190, 190a, 400, 600) angeordnet ist,

    wobei die Lastregelungsvorrichtung (200) weiterhin umfasst: eine Regel- und/oder Steuervorrichtung (210) zur Steuerung und/oder Regelung des ersten Ventils (190, 190a, 400, 600) und auch des zweiten Ventils (140), wobei die Regel- und/oder Steuervorrichtung (210) eingerichtet ist, die Steuerung und/oder die Regelung des ersten Ventils (190, 190a, 400, 600) und des zweiten Ventil (140) in Abhängigkeit voneinander durchzuführen.

2.  Lastregelungsvorrichtung (200) nach Anspruch 1, wobei die Kühlvorrichtung (180, 180a) ein Wärmetauscher ist.

3.  Lastregelungsvorrichtung (200) nach Anspruch 1 oder 2, wobei die Regel- und/oder Steuervorrichtung (210) eingerichtet ist, die Steuerung und/oder die Regelung des ersten Ventils (190, 190a, 400, 600) und/oder des zweiten Ventils (140) in Abhängigkeit einer Druckdifferenz an dem zweiten Ventil (140) durchzuführen.

4.  Lastregelungsvorrichtung (200) nach einem der Ansprüche 1 bis 3, wobei die Regel- und/oder Steuervorrichtung (210) eingerichtet ist, die Steuerung und/oder die Regelung des ersten Ventils (190, 190a, 400, 600) und/oder zweiten Ventils (140) in Abhängigkeit eines Referenzsignals der Wellendrehzahl der Turbine (160) durchzuführen.

5.  Lastregelungsvorrichtung (200) nach einem der vorangehenden Ansprüche, wobei der Motor (150) ein Gasmotor oder ein Otto-Motor ist; und/oder der Motor (150) angepasst ist, in einer Biogasanlage verwendet zu werden.

6.  Verfahren zum Betreiben einer Lastregelvorrichtung nach einem der Ansprüche 1 bis 5 zur Lastregelung eines Motors (150), umfassend Abzweigen eines Teils eines Abgasmassenstroms des Motors (150) stromaufwärts von einer Turbine (160) in eine Bypassleitung (170, 170a), wobei der abgezweigte Abgasmassenstrom in einer Bypassleitung (170, 170a) mittels eines ersten Ventils (190, 190a, 400, 600) geregelt und/oder gesteuert wird; und Kühlen des abgezweigten Abgasstroms stromaufwärts von dem ersten Ventil (190, 190a, 400, 600),

    **dadurch gekennzeichnet, dass** ein Lastregelmanagement eingebunden ist, welches für eine kombinierte Lastregelung von dem zweiten Ventil (140) mit dem ersten Ventil (190, 190a, 400, 600) ausgebildet ist,

    wobei eine Öffnungsfläche bzw. eine Öffnungsflächengröße des ersten Ventils (190, 190a, 400, 600) derart gesteuert und/oder geregelt wird, dass während der Lastregelung ein zweites Ventil (140), das stromabwärts hinter dem Verdichter (120) angeordnet ist, komplett geöffnet ist.

7. Verfahren nach Anspruch 6, wobei als Regelgröße vor der Übergabe der Lastregelung vom zweiten Ventil (140) auf das erste Ventil (190, 190a, 400, 600) die Druckdifferenz am zweiten Ventil (140) zur Anwendung kommt.

8. Verfahren nach Anspruch 6 oder 7, wobei als Regelgröße ein Referenzsignal der Wellendrehzahl des Turboladers zur Anwendung kommt.

9. Verfahren nach einem der Ansprüche 6 bis 8, wobei das erste Ventil (190, 190a, 400, 600) nicht aktiv gekühlt wird.

**Claims**

1. Load control device (200) for an engine (150) comprising
a compressor (120) for compressing air or an air/fuel mixture in an intake section of the engine (150) ;
an exhaust gas line (155) for discharging an exhaust gas mass flow from the engine (150);
a turbine (160) which is driven by an exhaust gas mass flow fed by the exhaust gas line (155) and which drives the compressor (120);
a bypass line (170, 170a) which branches off from the exhaust gas line (155) upstream of the turbine (160), a first valve (190, 190a, 400, 600) being arranged for serving to regulate and/or control the exhaust gas mass flow in the bypass line (170, 170a,
a cooling device (180, 180a) which is arranged upstream of the first valve (190, 190a, 400, 600), for cooling the exhaust gas mass flow, and
a second valve (140), in particular a throttle valve, which is arranged downstream of the compressor (120) and in front of the engine (150), the second valve (140) controlling and/or regulating the air or air/fuel mixture which is fed to the engine (150), **characterized in that** the cooling device (180, 180a) is arranged between the branch of the bypass line (170, 170a) from the exhaust gas line (155) and the first valve (190, 190a, 400, 600),
the load control device (200) comprising, furthermore: a regulating and/or control device (210) for controlling and/or regulating the first valve (190, 190a, 400, 600) and also the second valve (140), the regulating and/or control device (210) being set up to carry out the control and/or the regulation of the first valve (190, 190a, 400, 600) and of the second valve (140) as a function of one another.

2. Load control device (200) according to Claim 1, the cooling device (180, 180a) being a heat exchanger.

3. Load control device (200) according to Claim 1 or 2, the regulating and/or control device (210) being set up to carry out the control and/or the regulation of the first valve (190, 190a, 400, 600) and/or of the second valve (140) as a function of a pressure difference at the second valve (140).

4. Load control device (200) according to one of Claims 1 to 3, the regulating and/or control device (210) being set up to carry out the control and/or the regulation of the first valve (190, 190a, 400, 600) and/or second valve (140) as a function of a reference signal of the shaft rotational speed of the turbine (160).

5. Load control device (200) according to one of the preceding claims, the engine (150) being a gaseous fuel engine or an Otto engine, and/or the engine (150) being adapted for use in a biogas plant.

6. Method for operating a load control device according to one of Claims 1 to 5 for controlling the load of an engine (150), comprising branching off of a part of an exhaust gas mass flow of the engine (150) upstream of a turbine (160) into a bypass line (170, 170a), the exhaust gas mass flow which is branched off being regulated and/or controlled in a bypass line (170, 170a) by means of a first valve (190, 190a, 400, 600); and cooling of the exhaust gas flow which is branched off, upstream of the first valve (190, 190a, 400, 600),
**characterized in that** a load control management means is incorporated which is configured for a combined load control of the second valve (140) with the first valve (190, 190a, 400, 600),
an opening area or an opening area size of the first valve (190, 190a, 400, 600) being controlled and/or regulated in such a way that, during the load control, a second valve (140) which is arranged downstream of the compressor (120) is completely open.

7. Method according to Claim 6, the pressure difference at the second valve (140) being used as controlled variable before the transfer of the load control from the second valve (140) to the first valve (190, 190a, 400, 600).

8. Method according to Claim 6 or 7, a reference signal of the shaft rotational speed of the turbocharger being used as controlled variable.

9. Method according to one of Claims 6 to 8, the first valve (190, 190a, 400, 600) not being cooled actively.

**Revendications**

1. Dispositif de régulation de la charge (200) pour un moteur (150) comprenant :

un compresseur (120) pour compresser l'air ou un mélange d'air/carburant pendant un temps d'aspiration du moteur (150) ;

une conduite de gaz d'échappement (155) pour évacuer un débit massique de gaz d'échappement hors du moteur (150) ;

une turbine (160) entraînée par un débit massique de gaz d'échappement amené par la conduite de gaz d'échappement (155) et entraînant le compresseur (120) ;

une conduite de dérivation (170, 170a) se séparant, vers l'amont de la turbine (160), de la conduite de gaz d'échappement (155), une première soupape (190, 190a, 400, 600) étant disposée de façon à servir de régulation et/ou de commande du débit massique de gaz d'échappement dans la conduite de dérivation (170, 170a) ;

un dispositif de refroidissement (180, 180a) disposé vers l'amont de la première soupape (190, 190a, 400, 600), pour refroidir le débit massique de gaz d'échappement ; et

une deuxième soupape (140), notamment un clapet d'étranglement, disposé en aval après le compresseur (120) et devant le moteur (150), la deuxième soupape (140) commandant et/ou régulant l'air et/ou le mélange d'air/carburant amené au moteur (150) ;

**caractérisé en ce que** le dispositif de refroidissement (180, 180a) est disposé entre la bifurcation de la conduite de dérivation (170, 170a) dérivant de la conduite de gaz d'échappement (155) et la première soupape (190, 190a, 400, 600) ;

le dispositif de régulation de la charge (200) comprenant en outre : un dispositif de régulation et/ou de commande (210) pour commander et/ou réguler la première soupape (190, 190a, 400, 600) ainsi que la deuxième soupape (140), le dispositif de régulation et/ou de commande (210) étant conçu pour exécuter la commande et/ou la régulation de la première soupape (190, 190a, 400, 600) et de la deuxième soupape (140) en fonction l'une de l'autre.

2. Dispositif de régulation de la charge (200) selon la revendication 1, le dispositif de refroidissement (180, 180a) étant un échangeur thermique.

3. Dispositif de régulation de la charge (200) selon la revendication 1 ou 2, le dispositif de régulation et/ou de commande (210) étant conçu pour exécuter la commande et/ou la régulation de la première soupape (190, 190a, 400, 600) et/ou de la deuxième soupape (140) en fonction d'une différence de pression au niveau de la deuxième soupape (140).

4. Dispositif de régulation de la charge (200) selon l'une quelconque des revendications 1 à 3, le dispositif de régulation et/ou de commande (210) étant conçu pour exécuter la commande et/ou la régulation de la première soupape (190, 190a, 400, 600) et/ou de la deuxième soupape (140) en fonction d'un signal de référence de vitesse de rotation d'arbre de la turbine (160).

5. Dispositif de régulation de la charge (200) selon l'une quelconque des revendications précédentes, le moteur (150) étant un moteur à gaz ou un moteur à allumage commandé ; et/ou le moteur (150) étant adapté pour être utilisé dans une installation de biogaz.

6. Procédé d'actionnement d'un dispositif de régulation de la charge selon l'une quelconque des revendications 1 à 5 pour réguler la charge d'un moteur (150), comprenant :

la séparation d'une partie d'un débit massique de gaz d'échappement du moteur (150) en amont d'une turbine (160) dans une conduite de dérivation (170, 170a), le débit massique de gaz d'échappement bifurqué dans une conduite de dérivation (170, 170a) étant réglé et/ou commandé à l'aide d'une première soupape (190, 190a, 400, 600) ; et

le refroidissement du flux de gaz d'échappement en amont de la première soupape (190, 190a, 400, 600) ;

**caractérisé en ce qu'**une gestion de régulation de la charge est intégrée, cette gestion étant réalisée pour une régulation de la charge combinée de la deuxième soupape (140) avec la première soupape (190, 190a, 400, 600) ;

une surface d'ouverture et/ou une grandeur de surface d'ouverture de la première soupape (190, 190a, 400, 600) étant commandée et/ou réglée de telle sorte que pendant la régulation de la charge, une deuxième soupape (140) disposée en aval derrière le compresseur (120) est complètement ouverte.

7. Procédé selon la revendication 6, la différence de pression au niveau de la deuxième soupape (140) servant de grandeur de régulation avant le transfert de la régulation de la charge de la deuxième soupape (140) à la première soupape (190, 190a, 400, 600).

8. Procédé selon la revendication 6 ou 7, un signal de référence de la vitesse de rotation d'arbre du turbocompresseur servant de grandeur de régulation.

9. Procédé selon l'une quelconque des revendications 6 à 8, la première soupape (190, 190a, 400, 600) n'étant pas refroidie de façon active.

100

Abgas      Luft

195

190

160

110

Kraftstoff

165

120

130

180

140

170

155

150

Fig. 1

Fig. 2

Fig. 3a

Fig. 3b

Abgas

310

190

340

350

370

Abgas

320

360

180

170

Fig. 3c

Fig. 4a

Fig. 4b

Fig. 5

Fig. 6a

Fig. 6b

Fig. 7a

Fig. 7b

Fig. 8a

Fig. 8b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007021526 A1
- DE 10025500 A1
- JP 2002303145 A
- US 6176082 B1
- US 20080087017 A1
- EP 0434419 A2